# EUROPÄISCHE PATENTSCHRIFT

(11) **EP 2 913 990 B1**
(45) Veröffentlichungstag und Bekanntmachung des Hinweises auf die Patenterteilung: **10.04.2019**
(21) Anmeldenummer: 14157071.3
(22) Anmeldetag: 27.02.2014
(51) Int. Cl.: H04M 1/725, H04M 19/08

(54) **Verfahren und Vorrichtung zur effizienten Bereitstellung von Notruffunktionalität in einer DECT-Basisstation bei Ausfall der Elektroenergieversorgung**
Method and device for efficiently providing emergency call functionality in a DECT base station during loss of electrical power supply
Procédé et dispositif de mise à disposition efficace d'une fonctionnalité d'appel d'urgence dans une station de base DECT en cas de panne de l'alimentation en énergie électrique

(43) Veröffentlichungstag der Anmeldung: 02.09.2015
(73) Patentinhaber: Deutsche Telekom AG, 53113 Bonn (DE)
(72) Erfinder: Lange, Christoph, 10318 Berlin (DE); Kosiankowski, Dirk, 15732 Eichwalde (DE)
(74) Vertreter: Vossius & Partner Patentanwälte Rechtsanwälte mbB

(56) Entgegenhaltungen:
- EP-A1- 2 362 626
- WO-A1-99/31860
- US-A1- 2006 053 309

## Beschreibung

### Technisches Gebiet

Die vorliegende Erfindung bezieht sich allgemein auf das Gebiet der Telekommunikation und insbesondere auf eine Vorrichtung und ein Verfahren zur effizienten Bereitstellung einer Notruffunktionalität in Kundennetzen und Telekommunikationsnetzen vor allem solcher Netze der nächsten Generation, die über Netzelemente in aktiven Außenstandorten verfügen bei Ausfall der Energieversorgung.

### Hintergrund der Erfindung

Derzeit sind Telekommunikationsnetze - basierend auf der historischen Entwicklung - hauptsächlich so aufgebaut, dass separate Netze für verschiedene Dienste existieren, z. B. das Telefonnetz (PSTN, Public Switched Telephone Network) für Festnetztelefonie, das Mobilfunknetz für mobile Telefonie und das Breitbandnetz zur Nutzung von Breitbanddiensten (z. B. Internet), das seinerseits aus den Netzabschnitten Zugangsnetz, Aggregationsnetz und Kernnetz sowie den notwendigen optischen Transportnetzen für Aggregations- und Kernnetzdatentransport besteht.

Die notwendigen Netzelemente zum Betrieb des Netzes sind dabei üblicherweise in Betriebsstellen untergebracht, die ggf. eine Vielzahl von Netzelementen beherbergen, die ihrerseits z. B. unterschiedlichen Netzen (s. o.) und verschiedenen Netzabschnitten angehören können. Von den Betriebsstellen aus sind die einzelnen Endpunkte, wie Privat- oder Geschäftskunden - angeschlossen, z. B. im PSTN über Kupferzweidrahtleitungen, die auch für eine parallele Breitbandübertragung (z. B. ADSL2+) von der Betriebsstelle mit genutzt werden.

Um die Kommunikationsfähigkeit im Netz und des Teilnehmeranschlusses auch dann aufrecht zu erhalten, wenn die Energieversorgung ausfällt, werden in den Betriebsstellen umfangreiche Anlagen zur unterbrechungsfreien Stromversorgung (USV) des Telekommunikationsnetzes vorgehalten: Eine erste stromlose Zeitspanne kann über die in Akkumulatoren gespeicherte Energie abgedeckt werden. Steht dann die Energieversorgung weiterhin nicht zur Verfügung, werden Dieselgeneratoren eingesetzt, die die Netzelemente in der Betriebsstelle mit Energie versorgen. Im Telefonnetz erfolgt eine Fernspeisung des Endkundenanschlusses von der Betriebsstelle aus, so dass auch bei Ausfall der Energieversorgung in der Kundenlokation der Telefondienst zur Verfügung steht, sofern der Kunde ein geeignetes (fernspeisefähiges) Endgerät verwendet. Dies geschieht auch dann, wenn die Energieversorgung in der Betriebsstelle unterbrochen ist - über die beschriebene Notstromversorgung der Betriebsstelle.

In den allermeisten Kundenlokationen (Mehr-/Einfamilienhäuser) sind diese femspeisefähigen (meist drahtgebundenen) Endgeräte (Wählscheibentelefon, Tastentelefon) heute allerdings kaum noch im Einsatz. Vielmehr findet man drahtlose Telefone, die über z.B. DECT-Telefonie (Digital Enhanced Cordless Telephone) die Sprachkommunikation über eine, an das Stromnetz permanent angeschlossene, Basisstation sicherstellen. Beim Ausfall der Energieversorgung ist dann der Telefondienst - auch zu Notrufzwecken - nicht mehr verfügbar.

Moderne Netzabschlusseinrichtungen in Kundenlokationen vereinen heute oft eine Vielzahl der beschriebenen Funktionalitäten. So sind in vielen Endgeräten (Home Gateways) beim Kunden heute sowohl die DECT-Basisstation (zum Anschluss der drahtlosen Telefone), als auch das xDSL-Modem für den breitbandigen Internetanschluss sowie weiterer Techniken zum Anschluss von PCs, Laptops, Fernsehern, Fax-Geräten, über WLAN, Ethernet-LAN, USB, TAE, ISDN enthalten. Auch bei diesen Geräten ist die Funktion bei Stromausfall nicht mehr gewährleistet. Die Wahrscheinlichkeit für derartige Stromausfälle (Black Outs) ist gestiegen (siehe z. B. "Bundesamt warnt vor Panik bei Strom-Blackout in Großstädten: http://deutsche-wirtschafts-nachrichten.de/2013/08/28/bundesamt-warnt-vor-panik -bei-strom-blackout-ingrossstaedten/"; "Blackout in München (15.11.2012): http://www.handelsblatt.com/unternehmen/industrie/blackout-in-muenchen-stromausfall-inmuenchen-hatte-mit-energiewende-nichts-zu-tun/7517078.html"; und "Stromausfall in München: http://www.sueddeutsche.de/muenchen/ der-stromausfall-und-seine-folgen-als-in-muenchen-daslicht-ausging-1.1523784").

Gründend auf der Erwartung eines effizienteren und vereinfachten Netzbetriebs - und damit erhöhter Kosteneffizienz -, ist derzeit der Trend hin zu einem universellen Telekommunikationsnetz zu beobachten, das verschiedene Dienste (z. B. Breitbanddienste, Sprachtelefonie) über ein einziges IP-basiertes Netz (Internet Protocol) überträgt: Dann können parallele, dienste-spezifische Netzstrukturen konsolidiert und z. B. das PSTN abgeschaltet werden. Der Festnetztelefoniedienst wird dann in Form von Voice over IP (VoIP) über das All-IP-Netz mitübertragen (http://arstechnica.com/information-technology/2013/01/the-telephonenetwork-is-obsolete-get-ready-for-the-all-ip-telco/; http://www.sfgate.com/business/article/ATamp-T-preparing-to-disconnect-landline-service-4680523.php).

Ein weiterer Trend betrifft den Netzausbau: Durch stark anwachsende Verkehrsmengen ist der Trend zur Verlagerung von telekommunikationstechnischen Einrichtungen weg von zentralen Vermittlungsstellen hin zum Endkunden (Dezentralisierung) zu erkennen. Auch der voranschreitende Ausbau des Mobilfunknetzes führt zu einer Erhöhung der Anzahl der Basisstationen zur flächendeckenden Befriedigung des Bandbreitenbedarfs für den ansteigenden Datenverkehr.

So wird beispielsweise, um höhere Bitraten im leitungsgebundenen Zugangsnetz bereitstellen zu können, die mit Kupferzweidrahtleitungen zu überbrückende Entfernung verkürzt, indem die aktiven Netzelemente (z. B. DSLAMs, Digital Subscriber Line Access Multiplexer) in Außenstandorten untergebracht werden (z. B. in Kabelverzweigern, KVz bei VDSL-Technik (Very-high speed DSL)). Diese Außenstandorte werden mit Stromanschlüssen für die aktive Technik versehen, verfügen aber nur in seltenen Fällen über USV-Anlagen (Batterien, Generator) zur Überbrückung eines Stromausfalls. In diesem Sinne werden Außenstandorte auch abgesetzte Mobilfunkbasisstationen bzw. -antennenstandorte, die über Stromanschlüsse für die aktive Technik verfügen, im Allgemeinen - d. h. nicht an allen Standorten - jedoch keine USV-Anlagen aufweisen. Es existieren Mobilfunkbasisstationen auch in engem räumlichem Zusammenhang mit Betriebsstellen, die dann bestehende USV-Anlagen mitnutzen können oder, wenn sie von herausragender Bedeutung sind, können sie auch über eigene USV-Anlagen verfügen - dies kann aber im Allgemeinen nicht vorausgesetzt werden, insbesondere auch dann nicht, wenn zukünftig weiter im Feld verteilte kleine Basisstationen (z. B. Small Cells) genutzt werden.

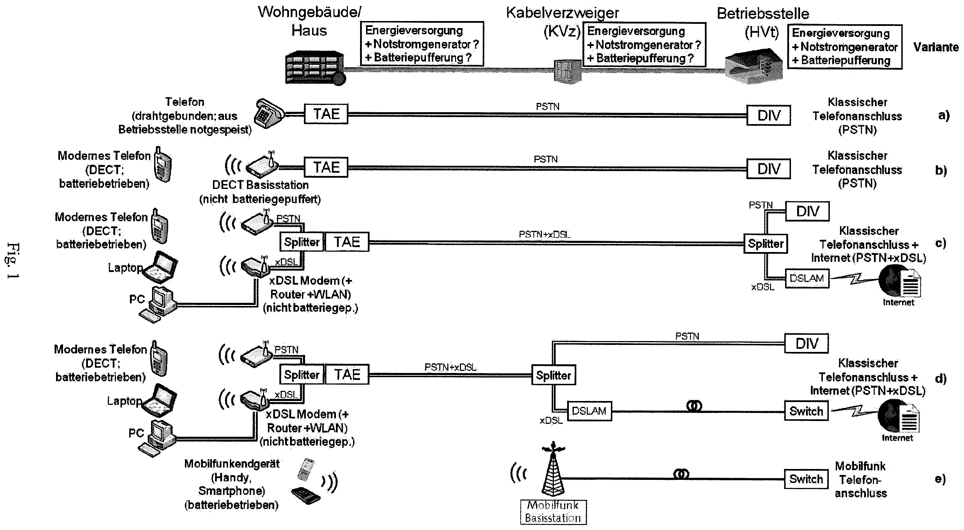

Der prinzipielle Grundaufbau des Zugangsbereiches eines Telekommunikationsnetzes entsprechend dem Stand der Technik ist in Fig. 1 dargestellt: Für den Festnetzbereich können die Varianten a) bis d) exemplarisch angenommen werden. Für den Zugang zum Mobilfunknetz soll Variante e) die überwiegende technische Lösung beschreiben.

Allen Varianten gemein ist, dass der in Betriebsstellen organisierte Teil des Netzes über USV-Anlagen verfügt (Notstromgeneratoren und Batterien), die eine Notstromversorgung sicherstellen. Die Außenstandorte verfügen demgegenüber im Allgemeinen nicht über vollwertige USV-Anlagen bestehend aus Generatoren und Batterien für den stundenweisen Notstrombetrieb.

Nachfolgend werden die einzelnen Varianten detailliert beschrieben.

Variante a) stellt den klassischen analogen Telefonanschluss dar (PSTN). In der Betriebsstelle befindet sich die digitale Vermittlungsstelle (DIV), die die Teilnehmer des Dienstes miteinander verbindet (vermittelt). Über eine Kupfer-Doppelader-Leitung wird die Kundenlokation mit einem Port der DIV verbunden und mit einer Netzabschlussdose (TAE, Telekommunikations-Abschluss-Einheit) terminiert. Ist in der Kundenlokation ein drahtgebundenes Telefon an die TAE angeschlossen, so wird dieses im Falle eines Stromausfalls von der DIV über die Kupferdoppelader aus der Betriebsstelle ferngespeist. Das Führen von Telefonaten ist in diesem Fall weiterhin möglich. Diese Variante gilt sinngemäß auch für einen digitalen Telefonanschluss (ISDN - Integrated Services Digital Network) mit drahtgebundenem ISDN-Telefon. Allerdings werden im Falle des Stromausfalls nur die Basisfunktionalitäten, zu denen das Telefonieren selbstverständlich gehört, unterstützt.

In Variante b) ist anstatt des drahtgebunden Telefons eine moderne Funk-Basisstation (z.B. mit diversen Komfortfunktion wie Anrufbeantworter, Telefonladestation, Hausruf) auf Basis des DECT-Standards mit entsprechenden drahtlosen Telefonen angenommen. Das Telefon-Handgerät ist batteriebetrieben und würde bei Stromausfall für einige Stunden/Tage funktionieren. Da aber die Basisstation im Allgemeinen an das normale 230-V-Wechselstromnetz angeschlossen wird und nicht batteriegepuffert ist (und üblicherweise auch kein Notstromgenerator vorhanden ist), wird im Falle des Stromausfalls das Telefonieren bzw. der Notruf nicht möglich sein.

In Ergänzung zu Variante b) hat sich Variante c) als typischer Anschluss für Telefonie und Breitband-Internetzugang etabliert. Dabei wird in der Betriebsstelle das xDSL-Breitbandsignal des DSLAMs (mit Anbindung an das Internet) über einen Splitter auf die Kupfer-Doppelader eingekoppelt. Auf der Leitung zur Kundenlokation werden damit sowohl die Telefoniesignale (PSTN) als auch die Breitband-Internetdaten (xDSL) gemeinsam übertragen. An der Kundenlokation werden diese über einen weiteren Splitter wieder getrennt. Als Netzabschluss für den Telefondienst dient wieder die TAE, während für den Breitband-Internetanschluss ein xDSL-Modem erforderlich ist. Diese Geräte sind über ein Netzteil an das 230-V-Wechselstromnetz angeschlossen und verfügen i.A. über keine Notstromversorgung (USV, Batteriepufferung, Generator). Die meisten modernen Geräte (Home Gateways) besitzen heute noch weitere Funktion wie WLAN, Ethernet LAN Switch und Router. Teilweise ist sogar die DECT-Basisstation mit integriert. Auch hier gilt: Im Falle des Stromausfalls wird das Telefonieren bzw. der Notruf nicht möglich sein. Wird ein drahtgebundenes Telefon, ähnlich wie Variante a) an die TAE angeschlossen ist das Telefonieren immer noch möglich.

Um höhere Bitraten bereitstellen zu können, wird die zu überbrückende Entfernung zur Kundenlokation verkürzt, indem die aktiven Netzelemente (z. B. DSLAMs) samt des Splitters in Außenstandorten untergebracht werden, z. B. in Kabelverzweigern, KVz bei VDSL-Technik (Very-high speed DSL). Der DSLAM wird mittels Glasfaser an einen Switch in der Betriebsstelle verbunden. Diese Anordnung ist in Variante d) dargestellt. Im Falle des Stromausfalls wird ein Zugang zum Internet nicht mehr möglich sein. Für die Möglichkeit des Telefonierens ist das verwendete Telefonieendgerät maßgebend. Wird, wie abgebildet, eine DECT-Basisstation mit angeschlossenen Funktelefonen benutzt, ist Telefonieren oder Notruf nicht möglich. Wird ein drahtgebundenes Telefon, ähnlich wie Variante a) an die TAE angeschlossen ist das Telefonieren immer noch möglich.

Variante e) stellt den Stand der Technik für einen Mobilfunkanschluss dar. Dazu werden Mobilfunkbasisstationen an geeigneten (entsprechend einer hohen Netzabdeckung) Außenstandorten aufgestellt und mittels Glasfaser mit einem Switch in der Betriebsstelle verbunden. Diese Außenstandorte verfügen über Stromanschlüsse für die aktive Technik, die, im Allgemeinen - d. h. nicht an allen Standorten - jedoch keine USV-Anlagen (Batterien, Generatoren) aufweisen. Der Kunde bucht sich mit seinem Endgerät (Mobiltelefone, Smartphone) durch Anmelden an der Mobilfunkbasisstation ins Mobilfunknetz ein und kann damit überall telefonieren. Im Falle eines lokalen Stromausfalls wird die betreffende Mobilfunkbasisstation (bzw. mehrere in einer vom Stromausfall betroffenen Region) den Kontakt zu allen dort eingebuchten Endgeräten verlieren.

Wie im Stand der Technik geschildert, erlaubt das heutige PSTN das Telefonieren auch bei Stromausfall - jedoch nur bei Nutzung eines geeigneten Endgerätes, das vollständig ferngespeist werden kann. Schon bei Nutzung der weit verbreiteten schnurlosen DECT-Telefone ist bei Ausfall der Energieversorgung in der Kundenlokation keine Telefonie mehr möglich (obwohl der PSTN-Anschluss von der Betriebsstelle ferngespeist wird), da die DECT-Basisstation stromlos ist und dadurch nicht mehr funktioniert. Es existiert mit dem PSTN eine dedizierte Diensteplattform, die ausschließlich der Realisierung des Telefoniedienstes dient. Nach der Transformation hin zu einem All-IP-Netz wird Telefonie als ein Dienst - unter ggf. vielen - über das Breitbandnetz produziert und realisiert.

Wird nach der erwähnten Netzplattformkonsolidierung der Telefondienst über das dann alleinig vorhandene All-IP-Netz übertragen, so werden Außenstandorte mit verwendet, die nach dem Stand der Technik ohne USV-Anlagen arbeiten, also bei einem Ausfall der Energieversorgung in dem betreffenden Gebiet nicht funktionieren:
Im Falle des Mobilfunknetzes wird die betreffende Mobilfunkbasisstation (bzw. mehrere in einer vom Stromausfall betroffenen Region) den Kontakt zu allen dort eingebuchten Endgeräten (User Equipment, UE) verlieren. Es ist kein Dienst mehr nutzbar, somit auch kein telefonischer Notruf absetzbar. Die UE können, je nach Ladestand des Akkumulators in den einzelnen Geräten noch eine gewisse Zeitdauer überbrücken und funktionieren zunächst unabhängig von der Energieversorgung weiter.

Im Falle des Festnetzes wird der im Außenstandort untergebrachte Zugangsmultiplexer, z. B. DSLAM in einem KVz oder in einem Gebäude bei FTTB (Fiber to the Building) - bzw. mehrere in einer vom Stromausfall betroffenen Region - funktionsunfähig und es ist entsprechend dem Stand der Technik keine Kommunikation von den angeschlossenen Endgeräten - typischerweise Heimnetzrouter mit den dahinterliegenden Kundenendgeräte (z. B. Telefon, Rechner, Laptop, Network Attached Storage, Tablet) - mit dem Netz mehr möglich und damit insbesondere kein telefonischer Notruf absetzbar. Im Allgemeinen verfügen die Festnetzendgeräte - im Gegensatz zum UE im Mobilfunk (s. o.) - auch über keine Batteriepufferung, so dass sie - wenn in der Kundenlokation ebenfalls die Energieversorgung zusammenbricht - sofort stromlos und damit funktionsunfähig sind.

Die in Betriebsstellen untergebrachten Netzelemente werden, wie im Stand der Technik beschrieben, durch USV-Anlagen bei einem eventuellen Ausfall des Energieversorgungsnetzes versorgt und bleiben - auch in einem konsolidierten All-IP-Netz - funktionstüchtig.

Zusammenfassend kann gesagt werden, dass in einem Telekommunikationsnetz mit aktiven Außenstandorten bzw. einem All-IP-Netz die Notruf-Telefonie-Funktionalität nach heutigem Stand der Technik bei einem Ausfall der Energieversorgung dann nicht gewährleistet werden kann, wenn Außenstandorte ohne USV-Anlagen in diesem Netz Verwendung finden, z. B. Mobilfunkbasisstationen und Small-Cell-Standorte im Mobilfunknetz sowie DSLAMs in KVzs oder Gebäuden im Festnetz. Es sind zwar Basisstationen im Heimbereich bekannt, bei denen bei einem Ausfall der Energieversorgung ein Notrufdienst bereitgestellt wird, allerdings lässt sich die Zeitspanne in der der Notrufdienst bereitgestellt wird noch verlängern. Insbesondere WO99/31860 A1 offenbart eine Basisstation im Heimbereich, bei der bei Stromausfall auf die Batterien von eingesteckten Endgeräten zugegriffen wird. EP 2 362 626 A1 offenbart eine DECT-Basisstation bei der bei einem Stromausfall von einem DSL-Modus in einen POTS-Modus umgeschaltet wird.

### Zusammenfassung der Erfindung

Die der vorliegenden Erfindung zu Grunde liegende Aufgabe besteht darin, ein Verfahren und eine Vorrichtung bereitzustellen, das für eine gegebene Anordnung, wie ein Telefonnetz mit aktiver Technik im Heimbereich (DECT-Basisstation) ermöglicht, bei Ausfall der Energieversorgung einen Notrufdienst sicherzustellen, Die Erfindung wird in den angehängten Ansprüchen definiert. Die Ausführungen und/oder Beispiele in der folgenden Beschreibung, die nicht durch die angehängten Ansprüche abgedeckt sind, werden als nicht zu der Erfindung gehörig betrachtet.

Die vorliegende Erfindung stellt ein Verfahren zur effizienten Bereitstellung von Notruffunktionalität bei Ausfall der Elektroenergieversorgung in Telekommunikationsnetzen mit mindestens einem aktiven Außenstandort bereit. Wobei der mindestens eine Außenstandort über mindestens eine Batteriepufferung und/oder eine Anlage zur unterbrechungsfreien Stromversorgung für einen Notstrombetrieb verfügt. Das Verfahren weist die Schritte auf: (i) Detektieren eines Ausfalls der Elektroenergieversorgung; (ii) Umschalten des aktiven Außenstandorts in den Notstrombetrieb und in einen Notrufbetriebsmodus aufgrund des in Schritt (i) detektierten Ausfalls der Elektroenergieversorgung; und (iii) Senden einer Nachricht an angeschlossene Endgeräte, dass ein Ausfall der Elektroenergieversorgung detektiert wurde und/oder der aktive Außenstandort in einen Notrufbetriebsmodus umschaltet.

Gemäß einem Aspekt der Erfindung weist der mindestens eine aktive Außenstandort eine DECT-Basisstation und/oder ein Home Gateway und/oder eine Mobilfunkbasisstation und/oder einen Festnetzknoten in einem All-IP-Festnetz auf.

DECT-Basisstation und Home Gateway sind dabei als aktive Technik-Elemente des Heimnetzes zu verstehen. Sie können im Sinne einer Verallgemeinerung des Ansatzes auch als aktive Außenstandorte interpretiert werden. Sie sind aber nicht an aktiven Außenstandorten des Betreibernetzes vorhanden (wie z. B. am Standort einer Mobilfunkbasisstation).

Gemäß einem Aspekt weist das Verfahren zusätzlich die Schritte: (i) Melden des Ausfalls der Elektroenergieversorgung an ein Netz und/oder eine Netzsteuerung, der/die mit dem Außenstandort verbunden ist; und daraufhin (ii) Umschalten in einen Notstrombetrieb.

Das Umschalten in den Notrufbetriebsmodus kann zeitverzögert um eine vorbestimmte Zeit t₁ nach dem Umschalten in den Notstrombetrieb erfolgen und/oder eine Verbindung mit dem Endgerät, insbesondere ein Telefonat kann für eine gewisse Zeit t₁ nach dem Umschalten in den Notstrombetrieb aufrechterhalten werden. Eine weitere Option ist das Senden einer Nachricht an die jeweiligen Endgeräte, dass ein Ausfall der Elektroenergieversorgung detektiert wurde und/oder der Außenstandort nach Ablauf der vorbestimmten Zeit t₁ in den Notrufbetriebsmodus umschaltet.

Gemäß einem weiteren Aspekt wird durch die an die jeweiligen Endgeräte gesendete Nachricht dem Nutzer signalisiert, dass eine DECT-Funkverbindung ausgeschaltet ist/wird und ein DECT-Mobilteil in eine DECT-Basisstation einzustecken ist, damit es wie ein drahtgebundenes Festnetztelefon zum Absetzen eines Notrufs genutzt werden kann.

Gemäß einem Aspekt weist das Umschalten in den Notrufbetriebsmodus folgendes auf: das Ausschalten einer DECT-Funkverbindung und das Umschalten sowohl eines DECT-Mobilteils als auch einer DECT-Basisstation in einen niedrigen Leistungsbetrieb und/oder das Unterbinden der Nutzung von Breitbandgeräten und Einschränken der Nutzung auf Notrufe, insbesondere Sprachnotrufe.

Verfügt das Telekommunikationsnetz, mit mindestens einem aktiven Außenstandort zusätzlich über mindestens ein endseitig angeschlossenes Gerät mit Netzabschlussfunktion, z.B. einen Heimnetzrouter (Home Gateway), weist das Verfahren gemäß einem weiteren Aspekt der Erfindung auf: (i) Detektieren eines Ausfalls der Elektroenergieversorgung eines aktiven Außenstandortes und/oder eines Ausfalls der lokalen Elektroenergieversorgung durch das angeschlossene Gerät mit Netzabschlussfunktion; (ii) Umschalten in einen Schmalbandmodus bei vorhandener lokaler Elektroenergieversorgung wobei das LAN weiterhin genutzt werden kann aber nach außen zum Außenstandort nur Notrufe zugelassen werden; oder (iii) Umschalten in einen Notrufbetriebsmodus bei unterbrochener lokaler Energieversorgung wobei alle Zusatzfunktionen des angeschlossenen Gerätes mit Netzabschlussfunktion ausgeschaltet sind und nur Notrufe direkt am Gerät möglich sind.

Vorzugsweise ist ein endseitig angeschlossenes Gerät mit Netzabschlussfunktion mit einer Notruftaste und ggf. mit Mikrofon und Lautsprecher ausgestattet.

Vorzugsweise ist ein Endgerät in Verbindung mit einem mobilen Notrufknopf, der an der Person getragen werden kann, um jederzeit einen Notruf absetzen zu können, bereitgestellt.

In diesem Fall des mobilen Notrufknopfes könnte eine Funkübertragung o.ä. über kurze Entfernung (innerhalb der Wohnung) dieses mobile Gerät an z. B. den Heimnetzrouter anbinden.

Gemäß einem Aspekt weist das Verfahren zusätzlich die Schritte auf: (i) Detektieren ob sich mehrere Endgeräte wie Mobiltelefone und/oder Festnetztelefone an einem gleichen Ort befinden und mit dem Außenstandort verbunden sind und (ii) Entscheiden das nur ein Gerät, z.B. ein Mobiltelefon oder ein Festnetztelefon, zum Notrufbetriebsmodus bereitgestellt wird und weitere Geräte komplett ausgeschaltet werden können.

Gemäß einem Aspekt der Erfindung wird ebenfalls eine Vorrichtung zur effizienten Bereitstellung von Notruffunktionalität in Telekommunikationsnetzen mit mindestens einem aktiven Außenstandort ausgestattet mit mindestens einer Batteriepufferung und/oder einer Anlage zur unterbrechungsfreien Stromversorgung, bei Ausfall der Elektroenergieversorgung unter Verwendung des zuvor beschriebenen Verfahrens bereitgestellt.

Es kann in allen Fällen eine Batteriepufferung - bzw. gegebenenfalls zusätzlich eine Absicherung mit Dieselgenerator - (USV-Anlage) der abgesetzten Außenstandorte vorgesehen werden. Diese Batteriepufferung kann insbesondere kosteneffizient/-günstig erfolgen, da das vorgeschlagene Verfahren ausschließlich Betriebsmodi mit niedrigem Leistungsverbrauch ("low power modes") bei Stromausfall für die Notrufversorgung benutzt. Die Zeitdauer der Notrufversorgung wird durch die erfindungsgemäße Verwendung der low power modes während des Notrufbetriebs erhöht (gegenüber dem Normalbetrieb). Im Heimnetzrouter wird für den Festnetzbetrieb eine Notrufmöglichkeit geschaffen, indem ein separater Notrufknopf angebracht wird, der gemeinsam mit der ebenfalls nun zu installierenden Batteriepufferung für den Heimnetzrouter eine Notrufmöglichkeit über das Festnetz bereitstellt. Bei Betrieb von DECT-Telefonen im Heimnetz wird das Mobilteil über eine Kabelverbindung (z. B. Ladekabel/Ladeschale) mit der DECT-Basisstation fest verbunden und es wird so die Notruffunktionalität ermöglicht wie bei einem fest angeschlossenen Telefon herkömmlicher Bauweise mit ferngespeister Notruffunktionalität.

Vor diesem Hintergrund liefert das Verfahren und die Vorrichtung entsprechend der vorliegenden Erfindungsbeschreibung eine Möglichkeit, diese Notruffunktionalität bei Ausfall der Energieversorgung sowohl in einem herkömmlichen Netz (das aus separaten Anteilen für Telefonie und Breitbandversorgung besteht) als auch - und vor allem - in einem konsolidierten All-IP-Telekommunikationsnetz sicherzustellen. Wie erwähnt, ist das Verfahren auch für heutige Netze, die noch nicht hin zu einem All-IP-Netz migriert sind, anwendbar, um eine Notruffunktionalität bei Ausfall des Energieversorgungsnetzes sicherzustellen. Als aktive Außenstandorte können nämlich auch DECT-Basisstationen und Heimnetzrouter angesehen werden, die üblicherweise nicht über USV-Anlagen abgesichert sind und daher bei Stromausfall keinen Notrufbetrieb ermöglichen. Verfügen abgesetzte Außenstandorte bereits über USV-Anlagen, so ermöglicht das erfindungsgemäße Verfahren eine gegenüber dem Normalbetrieb längere Aufrechterhaltung der Notruffunktionalität.

Der Nutzen der vorliegenden Erfindung ist auf somit zwei Seiten vorhanden:
Für den Netzbetreiber bietet sie den Vorteil eines durchgehenden Notrufbetriebs auch bei Stromausfall in Netzen, die aktive Außenstandorte enthalten.

Für den Kunden bietet sie den Vorteil, dass auch bei sehr lokal begrenztem Stromausfall (z. B. wenn bei Bauarbeiten auf einem Grundstück nur das eine Grundstück selbst von dem Stromausfall betroffen ist) die Notruffunktionalität aufrechterhalten bleibt.

### Kurze Beschreibung der Zeichnungen

Fig. 1 zeigt schematisch mehrere Varianten eines prinzipiellen Grundaufbaus eines Zugangsnetzaufbaus eines Telekommunikationsnetzes entsprechend dem Stand der Technik;
Fig. 2 zeigt schematisch den Zugangsnetzaufbau und das Grundprinzip der erfindungsgemäßen Lösung bei herkömmlicher Netzgestaltung (PSTN und paralleles Breitbandnetz);
Fig. 3 zeigt schematisch ein Festnetz mit parallelem Telefon- und Breitbandnetz gemäß einem ersten Ausführungsbeispiel der Erfindung;
Fig. 4 zeigt einen Ablaufplan für das Ausführungsbeispiel 1;
Fig. 5 zeigt einen Ablaufplan für das Ausführungsbeispiel 2;
Fig. 6 zeigt illustrativ einen Festnetzaußenstandort mit aktiver Technik gemäß Ausführungsbeispiel 3;
Fig. 7 zeigt einen Ablaufplan für das Ausführungsbeispiel 3;
Fig. 8 zeigt illustrativ ein Konvergentes Netz gemäß dem Ausführungsbeispiel 4.

### Ausführungsbeispiele der Erfindung

Nachfolgend wird die vorliegende Erfindung anhand von Ausführungsbeispielen und der Figuren näher erläutert.

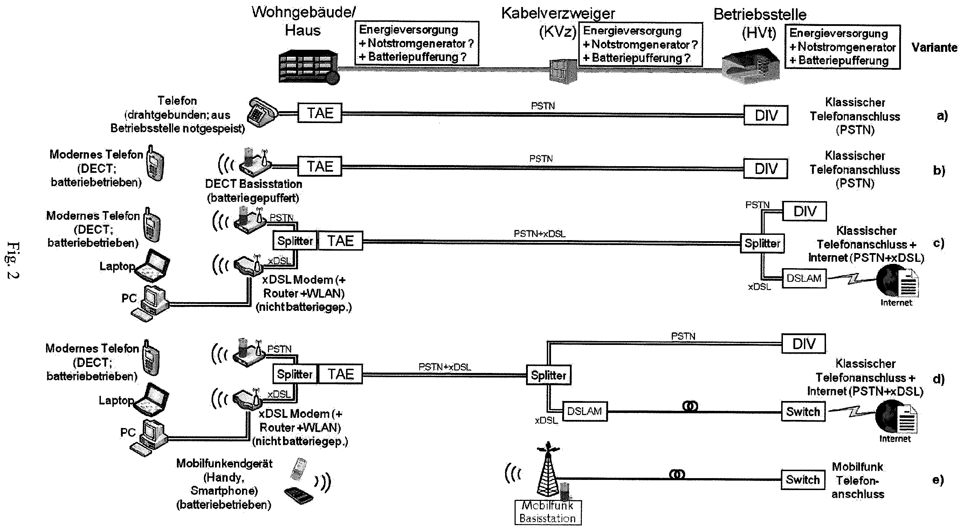

Die der Erfindung zu Grunde liegende Anordnung ist schematisch in Fig. 2 dargestellt. Das Prinzip beruht darauf, dass die aktiven Außenstandorte des Telekommunikationsnetzes (DECT-Basisstationen, Mobilfunkaußenstandorte, Festnetz-Zugangsmultiplexer) mit USV-Anlagen (Batterien bzw. Akkumulatoren) geeignet ausgerüstet werden, damit die aktive Netztechnik an diesen Außenstandorten eine festzulegende Zeitspanne (in der Größenordnung von z. B. wenigen Stunden) weiter betrieben werden kann, um die Notrufversorgung unter den Bedingungen des heutigen oder des All-IP-Netzes sicherzustellen. DECT-Basisstation und Home Gateway sind dabei als aktive Technik-Elemente des Heimnetzes zu verstehen. Sie können im Sinne einer Verallgemeinerung des Ansatzes auch als aktive Außenstandorte interpretiert werden. Sie sind aber nicht an aktiven Außenstandorten des Betreibernetzes vorhanden (wie z. B. am Standort einer Mobilfunkbasisstation).

Da dann eine Vielzahl von Standorten mit dieser USV-Technik auszurüsten ist, ist es vorteilhaft, dass diese USV-Anlagen sehr kostengünstig bereitgestellt werden können. Um dieses Ziel zu erreichen ist es wiederum günstig eine möglichst geringe Akku- / Batteriekapazität zu installieren. Erfindungsgemäß wird im Havariefall der Leistungsbedarf der aktiven Technik in den Außenstandorten auf ein Mindestmaß reduziert und die geforderte Überbrückungszeit bei möglichst geringer Akku- / Batteriekapazität und bei minimalen Kosten erzielt. Um dies zu erreichen, ist die aktive Technik im Sinne des lastadaptiven Betriebs in geeigneten niederbitratigen Modi zu betreiben, um ihre Leistungsaufnahme zu minimieren.

Fällt die Energieversorgung aus, wird erfindungsgemäß der Netzknoten im Außenstandort in einen "Havariemodus" (Notrufbetriebsmodus) versetzt: Es wird vorzugsweise in Richtung des (durch USV-Anlagen in den Betriebsstellen ohnehin gepufferten) Netzes und der Netzsteuerung signalisiert, dass ein solcher Ausfall der Energieversorgung vorliegt und der betroffene Netzknoten in den entsprechenden Modus geschaltet wird. Somit können auch andere Teile des Telekommunikationsnetzes während des Notrufbetriebsmoduses ggf. in einen Betriebszustand mit geringerer Leistungsaufnahme ("Low Power Mode") geschaltet werden. Dabei kann es sich z. B. um Teile eines Aggregations- oder Kernnetzes handeln. Außerdem werden die angeschlossenen Endpunkte ebenfalls darüber per Signalisierung informiert. Der Außenknoten versetzt nun alle Verbindungen zu den Endknoten in den schmalbandigen Notrufbetriebsmodus, in dem Konnektivität zum Netz für Notrufzwecke aufrechterhalten wird (z. B. nur NotrufTelefonverkehr) bei geringstmöglicher Leistungsaufnahme. Der Außenknoten selbst ist nun in einem Modus mit geringer Leistungsaufnahme und verbleibt darin, bis entweder die Energieversorgung wieder eintritt - oder bis die Batterie- / Akku-Kapazität erschöpft ist. Funktioniert die Energieversorgung des Außenstandortes wieder, so wird der betreffende Knoten geordnet wieder in den Normalbetriebsmodus versetzt. Entsprechend werden die angeschlossenen Endpunkte (Endgeräte) durch Signalisierung informiert und ebenfalls in den Normalbetrieb geschaltet. Gleichzeitig erfolgt vorzugsweise eine entsprechende Signalisierung in das Netz und in Richtung der Netzsteuerung, dass Normalbetrieb vorliegt.

Entsprechend kann dieses Verfahren angewendet werden, wenn lokal und/oder regional die Energieversorgung ausfällt und somit ein und/oder mehrere Außenstandorte betroffen sind.

Im Sinne eines konvergenten Netzes kann zudem übergreifend zwischen Festnetz und Mobilfunknetz ermittelt werden, ob sich ein Mobilfunkendgerät örtlich an der gleichen Position befindet, wie ein zugehöriger Festnetzanschluss: Dann ist es möglich, hier jeweils nur einen Notrufanschluss zur Verfügung zu stellen, um Leistung und damit Akku- / Batteriekapazität zu sparen und die vorhandene Kapazität für Aufrechterhaltung möglichst vieler potenzieller Notrufverbindungen zu nutzen. Dies wird anhand eines vierten Ausführungsbeispielsnachstehen näher beschrieben.

Das Wirkungsprinzip der Erfindung wird im Folgenden an Hand der Ausführungsbeispiele heutiges Netz (PSTN- und Breitbandnetz), Mobilfunknetz und Festnetz detailliert beschrieben.

### Ausführungsbeispiel 1: Festnetz mit parallelem Telefon- und Breitbandnetz

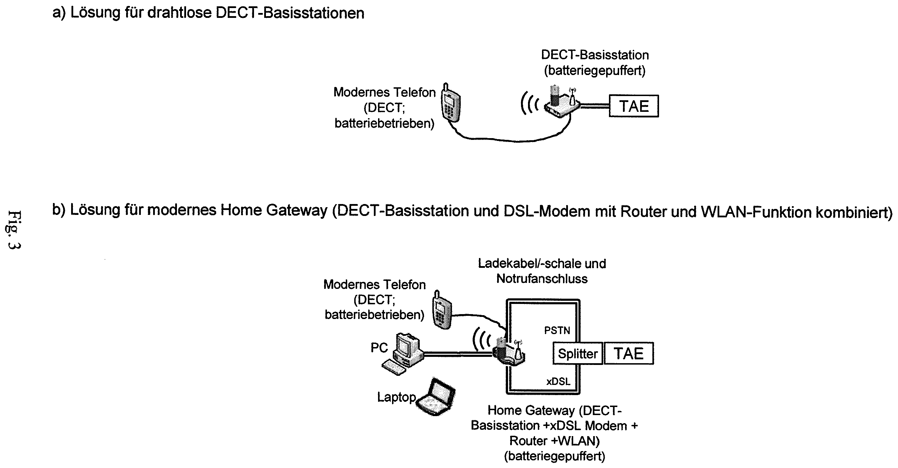

Bei dem Ausführungsbeispiel 1 wird in der Variante b) von Fig. 2 die DECT-Basisstation mit einer Batterie ausgestattet, um das erfindungsgemäße Verfahren für den Notruf ausführen zu können. Hier wird die DECT-Basisstation als aktiver Außenstandort betrachtet. Das Wirkungsprinzip des Verfahrens wird anhand der in Fig. 3 dargestellten zwei Anordnungen beschrieben. Die Anordnung a) zeigt eine Lösung für eine drahtlose DECT-Basisstation, die mit einer Batteriepufferung ausgestattet wird, um die Notruffunktionalität bei Stromausfall zu gewährleisten. Bei der Anordnung b) gibt es ein Home Gateway, das die DECT-Funktionalität mit enthält und in entsprechender Weise mit einer Batteriepufferung versehen wird.

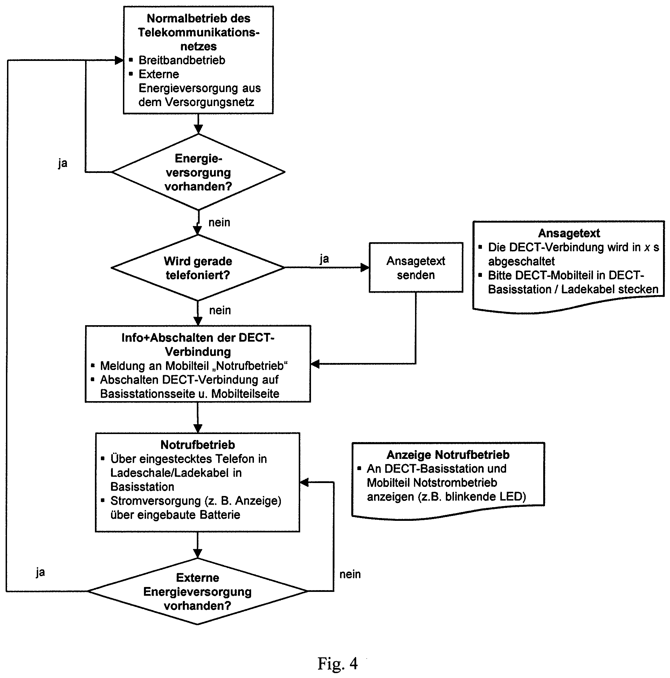

Das Wirkungsprinzip wird im Folgenden anhand des in Fig. 4 gezeigten Ablaufplans erläutert. Bei Normalbetrieb des Telekommunikationsnetzes, d.h. Breitbandbetrieb und einer externen Energieversorgung aus dem Versorgungsnetz, wird zunächst geprüft ob die Energieversorgung vorhanden ist. Sollte die Energieversorgung vorhanden sein wird der Normalbetrieb aufrechterhalten. Sollte festgestellt werden, dass die Energieversorgung nicht vorhanden ist, wird geprüft ob gerade telefoniert wird. Ist dies der Fall, wird ein entsprechender Ansagetext, z.B. das die DECT-Verbindung in x Sekunden automatisch abgeschaltet wird und dass das DECT-Mobilteil in die DECT-Basisstation / Ladestation zu stecken ist, gesendet. Falls gerade nicht telefoniert wird bzw. nach gesendetem Ansagetext und verstrichenen x Sekunden wird eine Meldung über den "Notrufbetrieb" an alle Mobilteile gesendet. Zusätzlich wird die DECT-Verbindung auf Basisstationsseite und Mobilteilseite abgeschaltet. In diesem Zustand ist ein Notrufbetrieb über das Mobilteil, das in der Ladeschale der Basisstation eingesteckt oder über ein Ladekabel mit der Basisstation verbunden ist und die Stromversorgung über eine eingebaute Batterie möglich. Der Notrufbetrieb kann dabei durch z.B. eine blinkende LED an der DECT-Basisstation und dem Mobilteil angezeigt werden. Es wird daraufhin weiter geprüft ob die externe Energieversorgung wieder vorhanden ist. Sollte dies der Fall sein so wird in den Normalbetrieb umgeschaltet. Ansonsten wird der Notrufbetrieb aufrechterhalten.

Wird gerade telefoniert, wenn der Stromausfall eintritt, wird eine Zeit lang (z. B. 10 s) die gesamte Verbindung batteriegepuffert aufrechterhalten. Das DECT-Mobilteil (oder DECT-Handgerät) verfügt über eine eigene Batterie und die DECT-Basisstation wird erfindungsgemäß damit ausgestattet. Es erfolgt eine Ansage, dass die DECT-Funkverbindung ausgeschaltet wird und dass das DECT-Mobilteil in die DECT-Basisstation einzustecken ist. Daraufhin wird die DECT-Funkverbindung ausgeschaltet, um sowohl das Mobilteil als auch die Basisstation in einen Low-Power-Mode (Notrufbetriebsmodus) zu versetzen. Das in die Basisstation gesteckte DECT-Mobilteil kann vorzugsweise auch als drahtgebundenes Festnetztelefon wie Variante a) in Fig. 2 genutzt werden. Mobilteil-Batterie und Basisstationsbatterie sorgen für die Stromversorgung des DECT-Handgerätes. Während dieser Zeit kann durch z. B. eine LED angezeigt werden, dass Notrufbetrieb vorliegt. Während des Notrufbetriebs ist in Variante b) der Fig. 3 keine Nutzung der Breitbandgeräte (z. B. PC, Laptop) möglich; einzig die Verbindung über den Telefonkanal wird im Notrufbetrieb unterstützt.

### Ausführungsbeispiel 2: Mobilfunknetz mit aktiven Außenstandorten

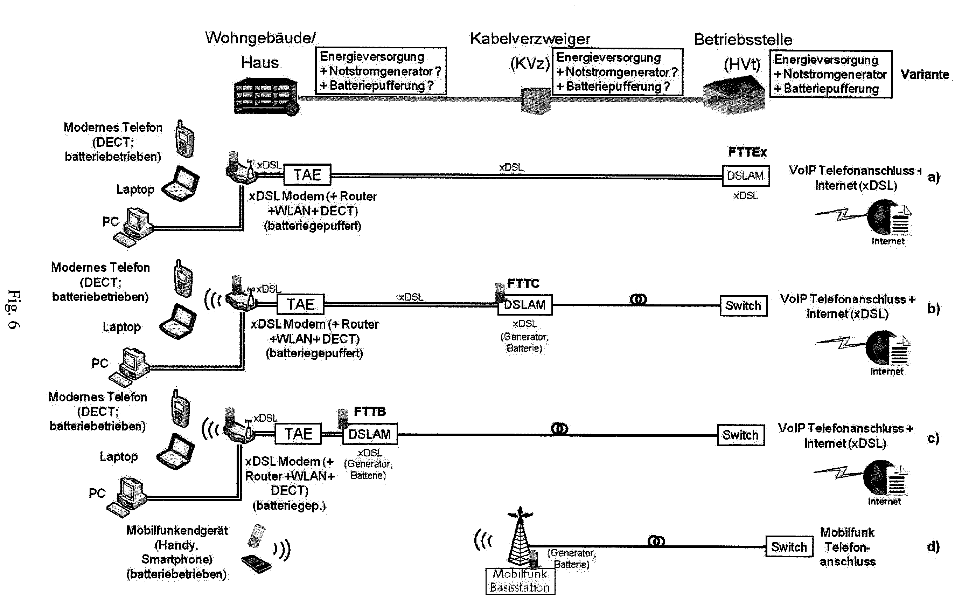

Fig. 2 zeigt in Variante e) sowie in derselben Art und Weise Fig. 6, Variante d) ein Ausführungsbeispiel 2 der vorliegenden Erfindung für ein Mobilfunknetz mit aktiver Technik in Außenstandorten.

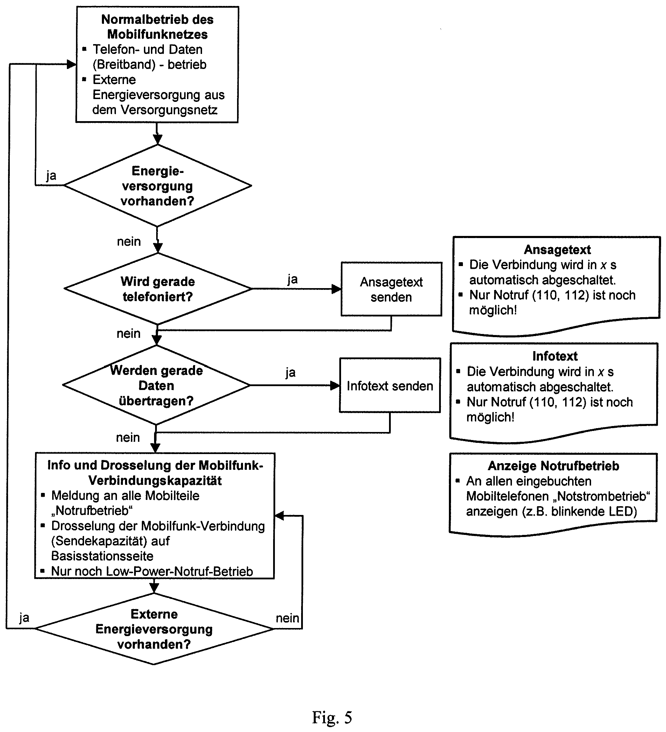

Das Wirkungsprinzip des erfindungsgemäßen Verfahrens in diesem Ausführungsbeispiel wird anhand des in Fig. 5 gezeigten Ablaufplans erläutert. Bei Normalbetrieb des Mobilfunknetzes, d.h. Telefon- und Daten(Breitband)-Betrieb und einer externen Energieversorgung aus dem Versorgungsnetz, wird zunächst geprüft ob die Energieversorgung vorhanden ist. Sollte die Energieversorgung vorhanden sein wird der Normalbetrieb aufrechterhalten. Sollte festgestellt werden, dass die Energieversorgung nicht vorhanden ist wird geprüft ob gerade telefoniert wird. Ist dies der Fall, wird ein entsprechender Ansagetext, z.B. das die Verbindung in x Sekunden automatisch abgeschaltet wird und das nur Notrufe möglich sein werden, gesendet. Falls gerade nicht telefoniert wird bzw. nach gesendetem Ansagetext und verstrichenen x Sekunden wird weiter geprüft ob gerade Daten übertragen werden. Ist dies der Fall, wird ein entsprechender Infotext gesendet. Dieser könnte z.B. lauten: "die Verbindung wird in x Sekunden automatisch abgeschaltet und es werden nur noch Notrufe möglich sein". Sollten keine Daten übertragen werden bzw. nach gesendetem Infotext und verstrichenen x Sekunden wird eine Meldung über den "Notrufbetrieb" an alle Mobilteile gesendet. Zusätzlich wird eine Drosselung der Mobilfunk-Verbindung (Sendekapazität) auf der Basisstationsseite eingeleitet und nur noch Low-Power-Notruf-Betrieb erlaubt. Gleichzeitig zeigen die eingebuchten Mobiltelefone den "Notstrombetrieb" an, z.B. durch eine blinkende LED. Es wird daraufhin weiter geprüft ob die externe Energieversorgung eventuell wieder vorhanden ist. Sollte dies der Fall sein so wird in den Normalbetrieb umgeschaltet. Ansonsten wird der "Notstrombetrieb" aufrechterhalten.

Der Mobilfunkknoten am Außenstandort (z. B. eine Basisstation, BS) stellt einen Ausfall der Energieversorgung fest. Im Folgenden wird *BS* synonym für den *aktiven Mobilfunkknoten am Außenstandort* benutzt. Die BS signalisiert an das Netz und die Netzsteuerung, dass sie einen Energieversorgungsausfall detektiert hat und nun auf Havariebetrieb, d.h. Notrufbetriebsmodus, umschaltet, in dem nur Notruftelefonverkehr möglich ist. Die BS informiert alle eingebuchten UEs, dass nur Notbetrieb möglich ist. Die BS wird so umkonfiguriert, dass nur noch Sprachnotrufe möglich sind und fährt in einen Schmalbandmodus, der den Notdienst ermöglicht und minimaler Leistung bedarf (Low Power Modus). Die BS braucht so nur geringe Batteriepufferung (Akku- / Batteriekapazität). UE schaltet sich ebenfalls in einen Notrufbetriebsmodus (z. B. werden Breitbanddienste UMTS, EDGE, HSPA, WLAN, GPS usw. abgeschaltet), um die Zeitdauer zu verlängern, in der die Batterie des UEs noch geladen ist. Erfindungsgemäß wird die BS mit einer Akku- / Batteriepufferung ausgestattet. Außerdem kann in diesem Ausführungsbeispiel davon Gebrauch gemacht werden, dass die UE über eine vom Energieversorgungsnetz - zumindest zeitweise - unabhängige Stromversorgung in Form des Akkus verfügen, die im Mittel noch für eine gewisse Zeitdauer den Betrieb ermöglicht.

### Ausführunasbeispiel 3: All-IP-Festnetz mit aktiven Außenstandorten

In Fig. 6 ist das Ausführungsbeispiel 3 entsprechend der vorliegenden Erfindung dargestellt, bei dem ein All-IP-Festnetz mit aktiver Technik in Außenstandorten zu Grunde liegt (in den Varianten FTTEx, FTTCab, FTTB; s. Fig. 6 a) bis c)). Beispielsweise wird die Glasfaser bis zum KVz geführt (FTTCab, b)) und von dort das Breitbandsignal von dem dort installierten VDSL-DSLAM über Kupferzweidrahtleitung übertragen. Die Erfindung kann sinngemäß auch Verwendung finden, wenn die Glasfaser weiter in Richtung des Kunden geführt wird und von z. B. einem Drop Point (DP) über weiter verkürzte Kupferzweidrahtleitung mit der derzeit in der Definition und Standardisierung befindlichen G.fast-Technik übertragen wird oder in das Gebäude geführt wird (FTTB, c)). Die Erfindung ist nicht auf DSL-Technik beschränkt; diese wird hier als sinnfälliges Beispiel verwendet.

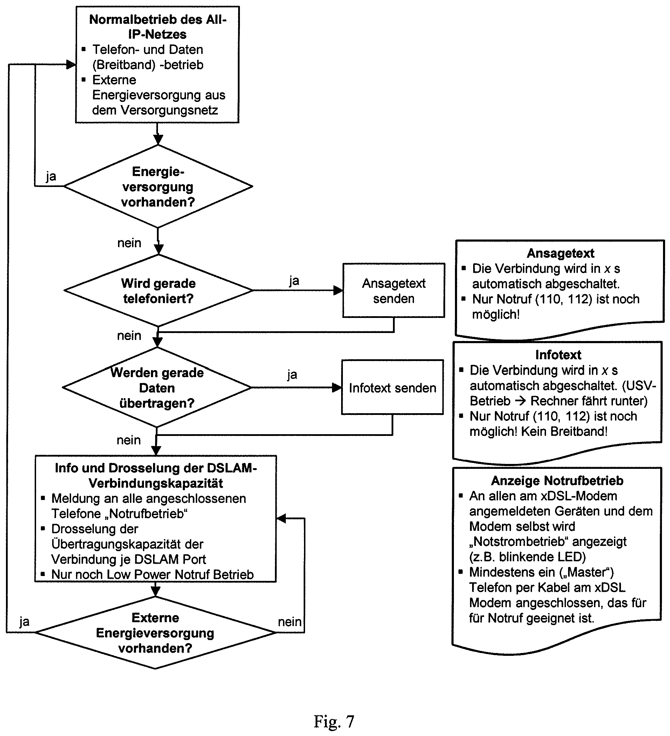

Das Wirkungsprinzip des Verfahrens in diesem Ausführungsbeispiel 3 wird anhand des in Fig. 7 gezeigten Ablaufplans erläutert. Bei Normalbetrieb des All-IP-Netzes, d.h. Telefon- und Daten(Breitband)-Betrieb und einer externen Energieversorgung aus dem Versorgungsnetz, wird zunächst geprüft ob die Energieversorgung vorhanden ist. Sollte die Energieversorgung vorhanden sein wird der Normalbetrieb aufrecht erhalten. Sollte festgestellt werden, dass die Energieversorgung nicht vorhanden ist wird geprüft ob gerade telefoniert wird. Ist dies der Fall, wird ein entsprechender Ansagetext, z.B. das die Verbindung in x Sekunden automatisch abgeschaltet wird und das nur Notrufe möglich sein werden, gesendet. Falls gerade nicht telefoniert wird bzw. nach gesendetem Ansagetext und verstrichenen x Sekunden wird weiter geprüft ob gerade Daten übertragen werden. Ist dies der Fall, wird ein entsprechender Infotext gesendet. Dieser könnte z.B. lauten: "die Verbindung wird in x Sekunden automatisch abgeschaltet und es werden nur noch Notrufe möglich sein" bzw. für den USV-Betrieb: "Rechner fährt runter". Sollten keine Daten übertragen werden bzw. nach gesendetem Infotext und verstrichenen x Sekunden wird eine Meldung über den "Notrufbetrieb" an alle angeschlossenen Telefone gesendet. Zusätzlich wird eine Drosselung der Übertragungskapazität der Verbindung je DSLAM Port eingeleitet und nur noch Low-Power-Notruf-Betrieb ermöglicht. Gleichzeitig kann an allen am xDSL-Modem angemeldeten Geräten und dem Modem selbst der "Notstrombetrieb" angezeigt werden, z.B. durch eine blinkende LED. Weiterhin kann mindestens ein ("Master") Telefon, das für Notrufe geeignet ist, per Kabel am xDSL-Modem angeschlossen werden und für Notrufe verwendet werden. Es wird daraufhin weiter geprüft ob die externe Energieversorgung eventuell wieder vorhanden ist. Sollte dies der Fall sein so wird in den Normalbetrieb umgeschaltet. Ansonsten wird der "Notrufbetrieb" aufrechterhalten.

Der aktive Festnetzknoten am Außenstandort (z. B. ein DSLAM, allgemein ein Zugangsmultiplexer, ZM) stellt einen Ausfall der Energieversorgung fest. Der ZM signalisiert an das Netz und die Netzsteuerung, dass er auf Havarie-Schmalbandbetrieb umschaltet. Der ZM informiert alle aktiven Ports, dass nur noch Notbetrieb möglich ist und schaltet in einen geeigneten Schmalbandmodus (Notrufbetriebsmodus), der mit minimaler Leistungsaufnahme verbunden ist. Der Heimnetzrouter prüft optional, ob lokal die Energieversorgung noch vorhanden ist:
- wenn ja, schaltet er netzseitig in den Schmalband-Modus (in der Wohnung kann das LAN weiterhin normal genutzt werden), nach außen zum ZM hin ist jedoch nur der Notruf möglich (auch z. B. über DECT-Telefone, da diese ja lokal noch über eine Stromversorgung verfügen).
- wenn nein, werden alle Zusatzfunktionen des Heimnetzrouters (z. B. WLAN, LAN, DECT, USB, NAS) abgeschaltet und es ist nur noch eine Notruffunktionalität direkt am Router möglich. Dazu verfügt der Heimnetzrouter erfindungsgemäß über eine geeignete Batteriepufferung und vorzugsweise über eine eingebaute Notruftaste, ggf. mit Mikrofon und Lautsprecher. Die Batterie des Heimnetzrouters ist gewöhnlich im Leerlauf und nur bei Betätigen der Notruftaste wird eine Verbindung über den ZM zur Notrufzentrale hergestellt (z. B. die Rufnummern der Polizei und der Feuerwehr 110 bzw. 112). Dadurch wird die Lebensdauer der Batterie erhöht und die Batterieladung nicht unnötig verbraucht, wenn kein Notruf abgesetzt werden soll.

Diese Notruffunktionalität am Heimnetzrouter kann erweitert werden um einen Notrufknopf, der an einer Person getragen wird, um auch bei plötzlichen Notfällen bei denen der Weg zum Heimnetzrouter nicht mehr möglich ist einen Notruf zu senden.

In diesem Fall des mobilen Notrufknopfes könnte eine Funkübertragung o.ä. über kurze Entfernung (innerhalb der Wohnung) dieses mobile Gerät an z. B. den Heimnetzrouter anbinden.

Eine zusätzliche Erweiterung besteht in der Anordnung (entsprechend Ausführungsbeispiel 1) indem das DECT-Handgerät über ein Kabel mit der Basisstation verbunden wird oder in die Basisstation eingesteckt wird und somit wie ein drahtgebundenes Festnetztelefon funktioniert.

Erfindungsgemäß wird der ZM mit einer Akku- / Batteriepufferung ausgestattet. Außerdem wird im Unterschied zum ersten Ausführungsbeispiel auch eine Batteriepufferung des Heimnetzrouters vorgesehen, die entsprechend dem Stand der Technik nicht vorliegt. Ebenso ist der Heimnetzrouter erfindungsgemäß mit der beschriebenen Notrufausrüstung (Taste, Mikrofon, Lautsprecher) auszustatten. Erreicht die integrierte Batterie einen kritischen Ladestand, ist eine Signalisierung an den Nutzer notwendig, dass diese ersetzt werden muss (z. B. ähnlich der bei Rauchmeldern üblichen Technik).

Der Heimnetzrouter ist hier als Beispiel für ein Gerät zu verstehen, das einen kundenseitigen Netzabschluss bereitstellt (network termination, NT). Bei einem Heimnetzrouter ist diese Funktion in einem Gerät mit anderen Funktionen (z. B. Routing im Heimnetz, ggf. Speicherung) integriert. Im Allgemeinen kann dies aber auch getrennt ausgeführt werden (separates NT und davon getrennter Router und Endgeräte). Nur ein Endgerät ohne diese NT-Funktion wäre hier nicht ausreichend (denn irgendwo zwischen dem aktiven Außenstandort des Netzes und dem Endgerät muss die genannte NT-Funktion realisiert werden).

### Ausführungsbeispiel 4: Konvergentes Fest- und Mobilfunknetznetz mit aktiven Außenstandorten

Das Verfahren für dieses Ausführungsbeispiel 4 funktioniert prinzipiell analog zu den in den vorhergehenden Ausführungsbeispielen 2 und 3 beschriebene Verfahren. Jedoch wird nun zusätzlich geprüft, ob sich ggf. Mobiltelefone an einem gleichen Ort, wie ein Festnetzanschluss befinden. Dies ist z. B. dann praktisch relevant, wenn sich mehrere Personen einer Familie mit ihren UEs (Mobiltelefonen) in ihrer Wohnung befinden, die auch einen Festnetzanschluss enthält. Um dies festzustellen wird vorzugsweise eine zentrale Steuerinstanz (ZSI) bereitgestellt, die diese Informationen vorhält, z. B. in einem Rechenzentrum (der "Cloud"). Wird nun festgestellt, dass der vorbeschriebene Fall eingetreten ist, wird nur noch ein Notrufkanal benötigt, z. B. über das Festnetz. Die Mobilfunktelefone werden durch die Basisstation abgemeldet und die der Basisstation zur Verfügung stehende und nun gesparte Energie kann für eine längere Betriebsdauer bei Stromausfall verwendet werden. Sinngemäß kann die Entscheidung auch anders herum ausfallen, also Abschaltung des Festnetzes und "Offenhalten" einer Mobilfunkverbindung. Diese Entscheidung wird vorzugsweise mittels einer Optimierung erreicht, die die ZSI durchführt mit der Zielfunktion eines möglichst langen Havariebetriebs des Gesamtnetzes in dem betroffenen Gebiet.

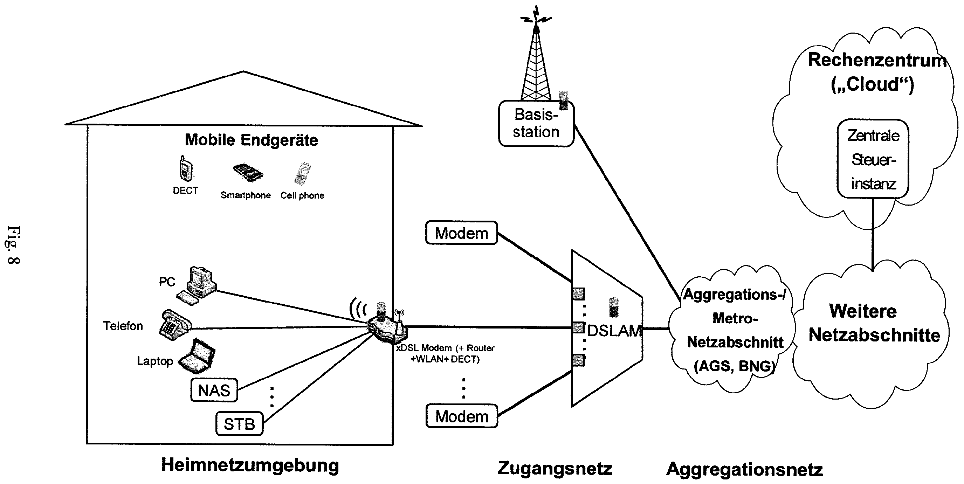

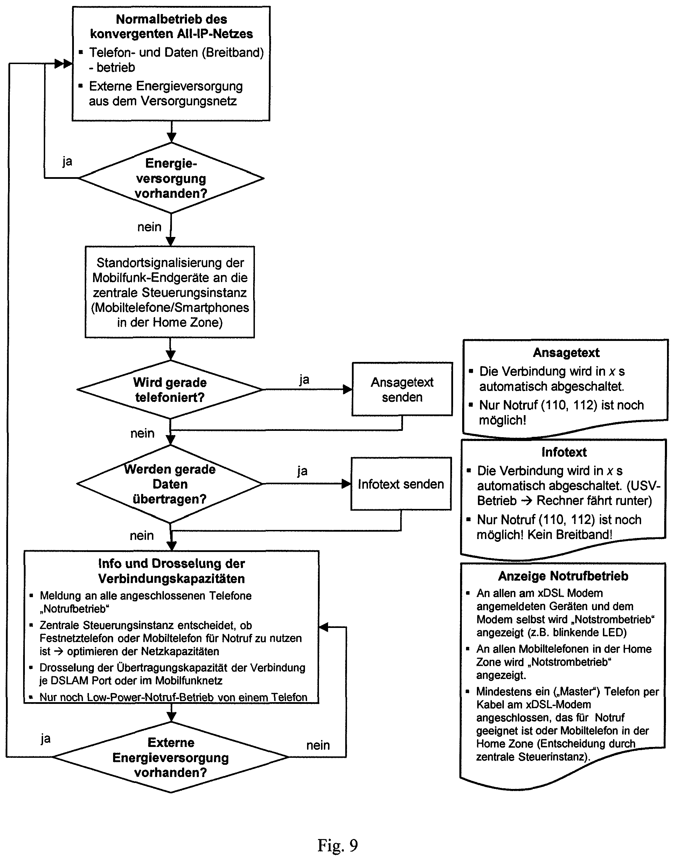

In Fig. 8 ist eine Anordnung eines konvergenten Netzes gezeigt, das aus einem All-IP-Festnetz und einem Mobilfunknetz besteht. Darüber hinaus ist die ZSI enthalten, die in der Cloud (in einem Rechenzentrum) residieren kann und die Koordinierung des zwischen Fest- und Mobilfunknetz übergreifenden Ablaufs im Havariefall übernimmt, der in Form eines Ablaufplanes in Fig. 9 gezeigt wird. Bei Normalbetrieb des konvergenten All-IP-Netzes, d.h. Telefon- und Daten(Breitband)-Betrieb und einer externen Energieversorgung aus dem Versorgungsnetz, wird zunächst geprüft ob die Energieversorgung vorhanden ist. Sollte die Energieversorgung vorhanden sein wird der Normalbetrieb aufrecht erhalten. Sollte festgestellt werden, dass die Energieversorgung nicht vorhanden ist wird eine Standortsignalisierung der Mobilfunk-Endgeräte an eine zentrale Steuerinstanz (Mobiltelefone/Smartpones in der Home Zone) veranlasst. Des Weiteren wird geprüft ob gerade telefoniert wird. Ist dies der Fall, wird ein entsprechender Ansagetext, z.B. das die Verbindung in *x* Sekunden automatisch abgeschaltet wird und das nur Notrufe möglich sein werden, gesendet. Falls gerade nicht telefoniert wird bzw. nach gesendetem Ansagetext und verstrichenen *x* Sekunden wird weiter geprüft ob gerade Daten übertragen werden. Ist dies der Fall, wird ein entsprechender Infotext gesendet. Dieser könnte z.B. lauten: "die Verbindung wird in *x* Sekunden automatisch abgeschaltet und es werden nur noch Notrufe möglich sein" bzw. für den USV-Betrieb: "Rechner fährt runter". Sollten keine Daten übertragen werden bzw. nach gesendetem Infotext und verstrichenen x Sekunden wird eine Meldung über den "Notrufbetrieb" an alle angeschlossenen Telefone gesendet. Weiterhin kann die zentrale Steuerinstanz entscheiden, ob z.B. ein Festnetztelefon oder ein Mobiltelefon für den Notruf bereitgestellt wird. Die Entscheidung fällt die zentrale Steuerinstanz dabei unter Berücksichtigung der Optimierung der Netzkapazität. Zusätzlich wird eine Drosselung der Übertragungskapazität der Verbindung je DSLAM Port oder im Mobilfunknetz eingeleitet und nur noch Low-Power-Notruf-Betrieb erlaubt. Gleichzeitig kann an allen am xDSL-Modem angemeldeten Geräten, dem Modem selbst und allen Mobiltelefonen in der Home Zone der "Notstrombetrieb" angezeigt werden, z.B. durch eine blinkende LED. Weiterhin kann mindestens ein ("Master") Telefon, das für Notrufe geeignet ist, per Kabel am xDSL-Modem angeschlossen werden oder ein Mobiltelefon in der Home Zone (Entscheidung durch zentrale Steuerinstanz) für Notrufe verwendet werden. Es wird daraufhin weiterhin geprüft ob die externe Energieversorgung eventuell wieder vorhanden ist. Sollte dies der Fall sein so wird in den Normalbetrieb umgeschaltet. Ansonsten wird der "Notstrombetrieb" aufrechterhalten.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche fallen.

## Patentansprüche

1. Verfahren zur effizienten Bereitstellung von Notruffunktionalität bei Ausfall der Elektroenergieversorgung in Telekommunikationsnetzen, mit mindestens einer DECT-Basisstation, die mindestens eine Batteriepufferung aufweist, mit den von der DECT-Basisstation durchgeführten Schritten:
a) Detektieren eines Ausfalls der Elektroenergieversorgung der mindestens einen DECT-Basisstation;
b) Umschalten der DECT-Basisstation in den Notstrombetrieb und in einen Notrufbetriebsmodus aufgrund des in Schritt a) detektierten Ausfalls der Elektroenergieversorgung; und
c) Senden einer Nachricht an angeschlossene Endgeräte, dass ein Ausfall der Elektroenergieversorgung der mindestens einen DECT-Basisstation detektiert wurde und die mindestens eine DECT-Basisstation in einen Notrufbetriebsmodus umschaltet,
wobei das Umschalten in den Notrufbetriebsmodus zeitverzögert um eine vorbestimmte Zeit t₁ nach dem Umschalten in den Notstrombetrieb erfolgt und ein Telefonat für eine gewisse Zeit t₁ nach dem Umschalten in den Notstrombetrieb aufrechterhalten wird, wobei im Notrufbetriebsmodus die DECT-Verbindung auf Basisstations- und Mobilteilseite abgeschaltet wird und ein Notrufbetrieb über ein DECT-Mobilteil, das in der Ladeschale der Basisstation eingesteckt oder über ein Ladekabel mit der Basisstation verbunden ist und die Stromversorgung über eine eingebaute Batterie möglich ist.

2. Verfahren nach Anspruch 1, mit den Schritten: Melden des Ausfalls der Elektroenergieversorgung an ein Netz und/oder eine Netzsteuerung, der/die mit der DECT-Basisstation verbunden ist; und daraufhin Umschalten in einen Notstrombetrieb.

3. Verfahren nach Anspruch 1 oder 2, wobei die an die jeweiligen Endgeräte gesendete Nachricht dem Nutzer signalisiert, dass eine DECT-Funkverbindung ausgeschaltet ist/wird und ein DECT-Mobilteil in eine DECT-Basisstation einzustecken ist, damit es wie ein drahtgebundenes Festnetztelefon zum Absetzen eines Notrufs genutzt werden kann.

4. Verfahren nach einem der Ansprüche 1 bis 3, wobei das Umschalten in den Notrufbetriebsmodus aufweist: Ausschalten einer DECT-Funkverbindung und Umschalten sowohl eines DECT-Mobilteils als auch einer DECT-Basisstation in einen niedrigen Leistungsbetrieb.

5. Verfahren nach einem der Ansprüche 1 bis 4, wobei das Umschalten in den Notrufbetriebsmodus aufweist: Unterbinden der Nutzung von Breitbandgeräten und Einschränken der Nutzung auf Notrufe, insbesondere Sprachnotrufe.

6. Verfahren nach einem der Ansprüche 1 bis 5, wobei das Telekommunikationsnetz, mit mindestens einer DECT-Basisstation zusätzlich über mindestens ein endseitig angeschlossenes Gerät mit Netzabschlussfunktion verfügt und das Verfahren ferner aufweist:
a) Detektieren eines Ausfalls der Elektroenergieversorgung der mindestens einen DECT-Basisstation;
b) Umschalten in einen Schmalbandmodus bei vorhandener lokaler Elektroenergieversorgung wobei das LAN weiterhin genutzt werden kann aber nach außen zur mindestens einen DECT-Basisstation nur Notrufe zugelassen werden; oder
c) Umschalten in einen Notrufbetriebsmodus bei unterbrochener lokaler Energieversorgung wobei alle Zusatzfunktionen des angeschlossenen Geräts mit Netzabschlussfunktion ausgeschaltet sind und nur Notrufe direkt am Gerät möglich sind,
wobei das Umschalten in den Notrufbetriebsmodus zeitverzögert um eine vorbestimmte Zeit t₁ nach dem Umschalten in den Notstrombetrieb erfolgt und ein Telefonat für eine gewisse Zeit t₁ nach dem Umschalten in den Notstrombetrieb aufrechterhalten wird, und Senden einer Nachricht an die jeweiligen Endgeräte, dass ein Ausfall der Elektroenergieversorgung detektiert wurde und die DECT-Basisstation nach Ablauf der vorbestimmten Zeit t₁ in den Notrufbetriebsmodus umschaltet.

7. Verfahren nach einem der Ansprüche 1 bis 6, wobei ein endseitig angeschlossenes Gerät mit Netzabschlussfunktion mit einer Notruftaste und ggf. mit Mikrofon und Lautsprecher ausgestattet ist.

8. Verfahren nach einem der Ansprüche 1 bis 7, wobei ein Endgerät in Verbindung mit einem mobilen Notrufknopf, der an der Person getragen werden kann, bereitgestellt wird um jederzeit einen Notruf absetzen zu können.

9. Verfahren nach einem der Ansprüche 1 bis 8, mit den Schritten:
a) Detektieren ob sich mehrere Endgeräte wie Mobiltelefone und/oder Festnetztelefone an einem gleichen Ort befinden und mit der DECT-Basisstation verbunden sind und
b) Entscheiden das nur ein Gerät, z.B. ein Mobiltelefon oder ein Festnetztelefon, zum Notrufbetriebsmodus bereitgestellt wird und weitere Geräte komplett ausgeschaltet werden können.

10. Vorrichtung zur effizienten Bereitstellung von Notruffunktionalität in Telekommunikationsnetzen mit mindestens einer DECT-Basisstation ausgestattet mit mindestens einer Batteriepufferung bei Ausfall der Elektroenergieversorgung unter Verwendung eines Verfahrens nach einem der Verfahrensansprüche 1 bis 9.

## Claims

1. A method of efficiently providing emergency call functionality in case of an electric power supply failure in telecommunication networks, comprising at least one DECT base station with at least one battery backup, comprising the following steps carried out by the DECT base station:
a) detecting an electric power supply failure of the at least one DECT base station;
b) switching the DECT base station into an emergency power operation and an emergency call mode on account of the electric power supply failure detected in step a); and
c) sending a message to connected terminals that an electric power supply failure of the at least one DECT base station has been detected and the at least one DECT base station switches into an emergency call mode,
wherein switching into the emergency call mode is delayed by a predetermined time period t₁ upon switching into the emergency power operation and a call is maintained for a certain time period t₁ upon switching into the emergency power operation,
wherein in the emergency call mode the DECT connection on the base station side and the mobile handset side is switched off and an emergency call operation is possible over a DECT mobile handset that is inserted into the charger of the base station or connected to the base station via a charging cable and power supply is possible by means of a built-in battery.

2. The method of claim 1, comprising the following steps: notifying a network and/or a network control connected to the DECT base station of an electric power supply failure; and subsequently switching into an emergency power operation.

3. The method of claim 1 or 2, wherein the message sent to the respective terminals indicates to the user that a DECT radio link is switched off and a DECT mobile handset is to be inserted into a DECT base station so as to be used like a wired landline telephone for making an emergency call.

4. The method of any of claims 1 to 3, wherein the step of switching into the emergency call mode comprises the following steps: switching off a DECT radio link and switching both a DECT mobile handset and a DECT base station into a low power operation.

5. The method of any of claims 1 to 4, wherein the step of switching into the emergency call mode comprises the following steps: inhibiting the use of broadband devices and restricting the use to emergency calls, in particular voice emergency calls.

6. The method of any of claims 1 to 5, wherein the telecommunication network with at least one DECT base station additionally has at least one device connected to the terminal end having a network termination functionality and wherein the method further comprises:
a) detecting an electric power supply failure of the at least one DECT base station;
b) switching into a narrow-band mode in case of local electric power supply, wherein the LAN is still available, but merely emergency calls are admitted to the outside to the at least one DECT base station; or
c) switching into an emergency call mode in case of an interruption of the local electric power supply, wherein all supplementary functions of the connected device with network termination functionality are switched off and only emergency calls directly at the device are possible,
wherein switching into the emergency call mode is delayed by a predetermined time period t₁ upon switching into the emergency power operation and a call is maintained for a certain time period t₁ upon switching into the emergency power operation, and sending a message to the respective terminals that an electric power supply failure has been detected and the DECT base station will switch into the emergency call mode upon expiry of the predetermined time period t₁.

7. The method of any of claims 1 to 6, wherein a device connected to the terminal end and having a network termination function is equipped with an emergency call button and optionally with a microphone and loudspeaker.

8. The method of any of claims 1 to 7, wherein a terminal in connection with a mobile emergency call button, which may be carried by the person, is provided so as to enable emergency calls at any time.

9. The method according to any of claims 1 to 8, comprising the following steps:
a) detecting whether a plurality of terminals, such as mobile phones and/or landline phones, are at the same location and are connected to the DECT base station, and
b) deciding that only one device, such as a mobile phone or a landline phone, is provided for the emergency call mode and further devices can be switched off completely.

10. A device for efficiently providing emergency call functionality in telecommunication networks, comprising at least one DECT base station equipped with at least one battery backup in case of an electric power supply failure using a method according to any of method claims 1 to 9.

## Revendications

1. Procédé destiné à fournir de façon efficace une fonctionnalité d'appel d'urgence en cas de panne de l'alimentation en énergie électrique dans des réseaux de télécommunication, avec au moins une station de base DECT qui comporte au moins une pile tampon, avec les étapes suivantes réalisées par la station de base DECT :
a) détection d'une panne de l'alimentation en énergie électrique de la station de base DECT au moins au nombre de un ;
b) commutation de la station de base DECT vers le fonctionnement avec courant de secours et vers un mode de fonctionnement d'appel d'urgence en raison de la panne de l'alimentation en énergie électrique détectée dans l'étape a) ; et
c) envoi d'un message à des terminaux connectés signalant qu'une panne de l'alimentation en énergie électrique de la station de base DECT au moins au nombre de un a été détectée et que la station de base DECT au moins au nombre de un commute dans un mode de fonctionnement d'appel d'urgence,
la commutation vers le mode de fonctionnement d'appel d'urgence s'effectuant avec une temporisation d'une durée t₁ prédéfinie après la commutation vers le fonctionnement avec courant de secours et une communication téléphonique étant maintenue pendant une certaine durée t₁ après la commutation dans le fonctionnement avec courant de secours,
la liaison DECT vers le côté station de base et partie mobile étant coupée dans le mode de fonctionnement d'appel d'urgence, et un fonctionnement d'appel d'urgence étant possible par le biais d'une partie mobile DECT qui est enfichée dans le socle de charge de la station de base ou qui est raccordée à la station de base par le biais d'un câble de charge, et l'alimentation électrique étant possible par le biais d'une batterie intégrée.

2. Procédé selon la revendication 1, avec les étapes suivantes : signalement de la panne de l'alimentation en énergie électrique à un réseau et/ou à une commande de réseau qui est raccordé(e) à la station de base DECT ; et ensuite commutation vers un fonctionnement avec courant de secours.

3. Procédé selon la revendication 1 ou 2, le message envoyé aux terminaux respectifs signalant à l'utilisateur qu'une liaison radio DECT est hors circuit / est mise hors circuit, et qu'une partie mobile DECT doit être enfichée dans une station de base DECT pour pouvoir être utilisée comme un téléphone de réseau fixe câblé pour effectuer un appel d'urgence.

4. Procédé selon l'une des revendications 1 à 3, la commutation vers le mode de fonctionnement d'appel d'urgence comportant : mise hors circuit d'une liaison radio DECT et commutation vers un mode de puissance faible aussi bien de la partie mobile DECT que d'une station de base DECT.

5. Procédé selon l'une des revendications 1 à 4, la commutation vers le mode de fonctionnement d'appel d'urgence comportant : empêchement de l'utilisation d'appareils à large bande et restriction de l'utilisation à des appels d'urgence, en particulier des appels d'urgence vocaux.

6. Procédé selon l'une des revendications 1 à 5, le réseau de télécommunication disposant, avec au moins une station de base DECT, en plus d'au moins un appareil connecté côté extrémité avec fonction de terminaisons réseau, et le procédé comportant en outre :
a) détection d'une panne de l'alimentation en énergie électrique de la station de base DECT au moins au nombre de un ;
b) commutation vers un mode bande étroite en présence d'une alimentation en énergie électrique locale, le LAN pouvant continuer à être utilisé, mais seuls des appels d'urgence étant autorisés vers l'extérieur en direction de la station de base DECT au moins au nombre de un ; ou
c) commutation vers un mode de fonctionnement d'appel d'urgence en cas d'interruption de l'alimentation en énergie électrique locale, toutes les fonctions supplémentaires de l'appareil connecté avec fonction de terminaison réseau étant mises hors circuit, et seuls des appels d'urgence étant possibles directement sur l'appareil,
la commutation vers le mode de fonctionnement d'appel d'urgence s'effectuant avec une temporisation d'une durée t₁ prédéfinie après la commutation vers le fonctionnement avec courant de secours, et une communication téléphonique étant maintenue pendant une certaine durée t₁ après la commutation dans le fonctionnement avec courant de secours, et envoi d'un message aux terminaux respectifs signalant qu'une panne de l'alimentation en énergie électrique été détectée et que la station de base DECT au moins au nombre de un commute dans le mode de fonctionnement d'appel d'urgence après expiration de la durée t₁ prédéfinie.

7. Procédé selon l'une des revendications 1 à 6, un appareil connecté côté extrémité avec fonction de terminaison réseau étant équipé d'une touche d'appel d'urgence et éventuellement d'un microphone et d'un haut-parleur.

8. Procédé selon l'une des revendications 1 à 7, un terminal en liaison avec un bouton d'appel d'urgence mobile qui peut être porté sur la personne étant fourni pour pouvoir effectuer à tout moment un appel d'urgence.

9. Procédé selon l'une des revendications 1 à 8, avec les étapes suivantes :
a) détection indiquant si plusieurs terminaux tels que des téléphones mobiles et/ou des téléphones fixes se trouvent dans un même endroit et sont raccordés à la station de base DECT, et
b) décision spécifiant qu'un seul appareil, par exemple un téléphone mobile ou un téléphone fixe, est fourni pour le mode de fonctionnement d'appel d'urgence et que d'autres appareils peuvent être complètement mis hors circuit.

10. Dispositif destiné à fournir de façon efficace une fonctionnalité d'appel d'urgence dans des réseaux de télécommunication, avec au moins une station de base DECT équipée d'au moins une pile tampon en cas de panne de l'alimentation en énergie électrique avec utilisation d'un procédé selon l'une des revendications de procédé 1 à 9.
